# EUROPÄISCHE PATENTSCHRIFT

(11) **EP 1 915 231 B1**
(45) Veröffentlichungstag und Bekanntmachung des Hinweises auf die Patenterteilung: **07.04.2010**
(21) Anmeldenummer: 06775830.0
(22) Anmeldetag: 09.08.2006
(51) Int. Cl.: B23P 9/04, C21D 7/04, B24B 39/00, B24B 47/00, H02K 33/16, H01F 7/16, H01F 7/121, H02P 25/02

(54) **VERFAHREN ZUR KALTEN MIKROSCHMIEDETECHNIK VON BELIEBIGEN 3-D-FREIFORMFLÄCHEN**
METHOD FOR THE TECHNIQUE OF COLD MICROFORGING ANY FREELY FORMED 3-D SURFACES
PROCEDE PERMETTANT LE MICROFORGEAGE A FROID DE N'IMPORTE QUELLES SURFACES TRIDIMENSIONNELLES DE FORME LIBRE

(30) Priorität: 09.08.2005 DE 102005037544
(43) Veröffentlichungstag der Anmeldung: 30.04.2008
(73) Patentinhaber: Löcker, Christian, 59510 Lippetal-Herzfeld (DE)
(72) Erfinder: Löcker, Christian, 59510 Lippetal-Herzfeld (DE)
(74) Vertreter: Kayser, Christoph
(86) Internationale Anmeldenummer: PCT/DE2006/001393
(87) Internationale Veröffentlichungsnummer: WO 2007/016919

(56) Entgegenhaltungen:
- DE-A1- 10 243 415
- GB-A- 712 334
- US-A- 4 641 510
- US-A1- 2001 043 133
- US-A1- 2003 213 280

## Beschreibung

Die Erfindung betrifft eine elektromechanisches Verfahren zur Glättung und Kaltverfestigung der Oberfläche von Werkzeugen, Maschinen- und anderen Teilen durch das Hämmern auf die Oberfläche der genannten Teile zur Aufnahme an einer Bearbeitungsmaschine oder einem Roboter.

Die Offenlegungsschrift DE 102 43 415 A1 beschreibt eine Vorrichtung, bei der die Bewegung des Kopfes durch Umwandlung des Ultraschalls in eine mechanische Bewegung erfolgen soll. Diese Offenlegungsschrift offenbart jedoch nicht die Art und Weise der Umwandlung des Ultraschalls in die Bewegung des schlagenden Kopfes und geht mit keinem Wort auf die Amplitude des Schlages ein.

US-A-4 641 510 beschreibt ein elektromechanisches Verfahren gemäß dem Oberbegriff des Anspruchs 1, zur Kaltverfestigung von Werkstücken, wobei der Schlagkopf von zwei verschiedenen Magnetflüssen angetrieben ist. Diese Magnetflüsse wirken zur genauen Steuerung der Schlagfrequenz, der Schlagamplitude un der Anschlagenergie des Werkzeuges zusammen. Diese Parameter werden variabel in Bezug auf die Eigenschaften des Werkstückes angepasst. Einzelheiten bezüglich der Steuerung des Abstands des Nulldurchgangs der Schlagfrequenz von de Werkstückoberfläche werden in US-A-4 641 510 jedoch nicht offenbart. Beide in US-A-4 641 510 beschriebenen Magnetflüsse werden zum Antreiben des Schlagkopfes und nicht für die Halterung des Schlagkopfes in seiner Ruhelage verwendet. Ein gepulster Erregerstrom mit oder ohne Gleichstromanteil zur Erzeugung der Magnetflüsse findet ebenfalls keine Erwähnung.

Aus US 2001/043133 A1 ist bekannt, dass der Schlagkopf ohne Erregerstrom durch einen Magnetfluss in einer Ruhelage gehalten wird. Jedoch ist die elektromechanische Vorrichtung gemäß US 2001/043133 A1 ein Aktor und keine Schlagvorrichtung. Eine Steuerung des Abstands des Nulldurchgangs der Schlagfrequenz von der Werkstückoberfläche wird ebenfalls nicht erwähnt.

Gegenüber dem Stand der Technik liegt der Erfindung die Aufgabe zugrunde, mit einem Minimum an Verschleiß, Abrieb und Energieaufwand die Oberfläche von Werkzeugen, Werkstücken und Maschinenteilen durch variable Anpassung der Schlagfrequenz und Schlagamplitude sowie variable Anpassung der Nullage bzw. des Nulldurchganges der Schlagfrequenz an die örtliche Form, Wandstärke und den Härtegrad der Teile zu glätten und zu verfestigen.

Diese Aufgabe wird erfindungsgemäß mit den in Anspruch 1 angegebenen Merkmalen gelöst.

Die Unteransprüche stellen vorteilhafte Weiterbildungen der Erfindung dar.

Aufgrund der magnetischen Aufhängung mit variabler, jedoch definierter Ruhestellung des Schlagkopfes verbunden mit der Werkstoff- und geometrischen Parametern abhängigen, elektrischen und elektronischen Steuerung und/oder Regelung der Frequenz und Amplitude des Schlages wird erfindungsgemäß für jede Stelle einer Werkstück- oberfläche die optimale Schlagfrequenz und Amplitude sowie die Ruhelage des Schlagkopfes derart ermittelt und eingestellt, dass das beste Resultat in kürzester Zeit mit einem Minimum an Energieaufwand erzielt wird.

In einfachster Ausführung besitzt eine Vorrichtung einen in der Regel kugelförmigen Schlagkopf, der aus einem sehr harten Werkstoff besteht. Der Schlagkopf ist an einem Träger auswechselbar angeordnet. So kann er gegen einen anderen, z.B. stempelförmigen Kopf, ausgewechselt werden, um texturierte Oberflächen zu erzeugen.

Wenigstens ein Teil des Trägers des Schlagkopfes ist magnetisch leitend und wird durch einen ringschlauchförmigen magnetischen Fluß in einer bevorzugten Ruhestellung gehalten. Er ist seitlich durch Radiallager oder Magnetlager oder andere Lagerungsarten geführt und gehalten, so dass er aus seiner Ruhestellung axiale Ausschläge ausführen kann. Dieser erste magnetischer Fluß wird entweder durch einen axial magnetisierten Dauermagnetring erzeugt, der seinerseits axial verstellbar den magnetischen Teil des Trägers des Schlagkopfes koaxial umgibt oder durch eine mit geregeltem Strom durchflossene zylinderförmige Spule erzeugt, die sich koaxial um den magnetischen Teil des Trägers des Schlagkopfes befindet. Im letzteren Fall kann die Spule aus mehreren Teilwicklungen bestehen, die je nach Bedarf an magnetischer Feldstärke und Ruhelage des Schlagkopfes in Reihe, parallel oder entgegengesetzt geschaltet und mit Strom durchflossen werden.

Angeregt durch das Fließen eines geregelten und/oder gepulsten Stromes mit oder ohne einem Gleichstromanteil durch eine zweite, sich im selben Magnetfeld oder in einem zweiten Zweig, z.B. äußeren Fluß, desselben Magnetfeldes befindlichen Spule, die mit dem Träger des Schlagkopfes befestigt und diesbezüglich koaxial angeordnet ist, wird der Schlagkopf in axiale Schwingungen mit definierter Frequenz und Amplitude derart versetzt, dass die Mittenlage bzw. der Nulldurchgang der Schlagschwingungen sich be- liebig regeln lässt. Somit wird die Schlagfrequenz, Schlagamplitude und die Mittenlage bzw. Nulldurchgang der Schlagschwingungen an die geometrischen Verhältnisse und mechanische Eigenschaften des Werkstücks angepasst.

Eine weitere vorteilhafte Ausgestaltung der Erfindung sieht vor, dass anstelle des Dauermagnetrings mehrere kleinere zylinderförmige Dauermagnete parallel zu einander auf einem Zylinder um den magnetischen Teil des Schlagkopfträgers angeordneten werden. In analoger Weise können die kleinen Dauermagnete jeweils durch gleichstromdurchflossene Spulen ersetzt werden. Durch diese Konstellation der Dauermagnete bzw. der Spulen entstehen zwei verschiedene Magnetflüsse, ein innerer und ein äußerer Fluß. Der innere Magnetfluß sorgt dafür, dass der Träger des Schlagkopfes eine definierte Lage einnimmt. Die Windungen der Erregerspule kann in diesem Falle sich im inneren Magnetfluß, im äußeren Magnetfluß oder in den beiden Magnetflüssen befinden. Im letzteren Falle werden die Windungen der beiden Spulen entgegengesetzt gewickelt, da die Magnetflussrichtungen gegensinnig gerichtet sind.

Eine derart konzipierte Vorrichtung kann die Oberflächen von Werkzeugen und Werkstücken partiell unterschiedlich bearbeiten, hämmern, glätten und kalt verfestigen. Durch programmgesteuerte und elektronische Anpassung des Abstandes der Schlagschwingungsmittenlage zur Oberfläche des Werkstücks wird der Wirkungsgrad der Vorrichtung optimiert und somit die Verlustleistung minimiert. So werden beispielsweise die Kanten mit höherer Frequenz und kleineren Amplituden bearbeitet, um die Form und Gestalt des Teils zu bewahren und die Bohrungsöffnungen nicht einzuengen.

Eine vorteilhaftere Nutzung der Vorrichtung sieht die Kombination dieser elektromechanischen Vorrichtung mit einem eigens für diese Aufgabe entwickelten analytischen CAM-System als ein neues Verfahren vor.

Die handelsüblichen CAM-Systeme bearbeiten die Oberfläche eines Werkstücks stets durch die parallele Führung des Werkzeuges zur gewünschten Oberfläche des Werkstücks, das sogenannte Offset-Verfahren. Dagegen arbeitet das erfindungsgemäße Verfahren mit einem analytischen CAM-System. Nach der Analyse der gewünschten 3- D-Oberfläche anhand der Geometriedaten wird der kleinste Krümmungsradius der Fläche ermittelt und als größter Kugelradius des Werkzeuges bestimmt. Nach Wahl des Werkzeugradius berechnet das erfindungsgemäße CAM-System die Bahn des Mittelpunktes des kugelförmigen Fräs- und Klopfwerkzeuges, in dem es eine Kugel gleichen Radius über die gesamte gewünschte Oberfläche abrollen lässt und den geometrischen Ort der Kugelmittelpunkte als neue 3-D-Fläche für die Führung des Werkzeugmittelpunktes ermittelt. Anschließend werden die Krümmungen der neuen 3-D-Fläche berechnet und analysiert und darauf die optimalen Führungsbahnen des Werkzeugmittelpunktes derart ermittelt, dass die Riefen beim Fräsen und die Wulstbildung beim Klopfen minimiert werden.

Das erfindungsgemäße analytische CAM-System kennt somit zu jeder Zeit den momentanen Berührungspunkt des Werkzeuges mit der Oberfläche des Werkstücks und kann entsprechend agieren. Flache Bahnen werden mit einer anderen Strategie bearbeitet als stärker gekrümmte Bahnen oder Ecken von Bohrungen, Vertiefungen, Nuten oder Werkstückkanten.

Die Kombination und elektronische Koppelung der Vorrichtung mit dem beschriebenen analytischen CAM-System mit oder ohne Einbindung eines mechanischen oder berührungslosen Oberflächen-Messverfahrens, wie z.B. LASER-Messung der Werkstückoberfläche während der Bearbeitung, führt zu einem intelligenten und autonomen Fräs- und Klopf-Verfahren im Sinne der Regelungstechnik. Die gewünschten 3-D-Flächenformen, Form- und Lagetoleranzen sowie die partiellen Oberflächenrauhig- keiten und Festigkeiten werden gemäß dem Zeichnungsprogramm von diesem intelligenten System übernommen und automatisch durchgeführt.

Dieses Intelligente System erkennt alle Kanten und andere Schwachstellen, wie z.B. dünnere Wandungen des Werkstücks und behandelt diese entsprechend schonend.

Da der tatsächliche momentane Berührungspunkt des Klopfwerkzeuges mit dem Werkstück bekannt ist, kann die Längsachse der Vorrichtung stets als Normale zur Flächentangente am Berührungspunkt der Werkstückoberfläche gerichtet und geführt werden. Dadurch erfolgt der optimalste Klopfvorgang und wird das derzeit beste Resultat erzielt.

Im Einzelnen zeigen:
- Fig. 1: den Querschnitt durch die Vorrichtung mit einer gehäusefesten Spule als Haltemagnet und einer axial beweglichen Erregerspule des Schlagkopfes,
- Fig.2: den Querschnitt durch die Vorrichtung mit einem gehäusefesten Dauermagnetring oder mehreren kleineren Dauermagneten bzw. Spulen ringförmig um den Träger des Schlagkopfes als Haltemagnet angeordnet und einer oder zwei axialbeweglichen Erregerspulen des Schlagkopfes.

Identische Teile haben die gleiche Ziffer oder den gleichen Buchstaben. Unterschiedli- che Indizes kennzeichnen verschiedene Bereiche oder unterschiedliche Ausführungen oder mehrfache Anordnung desselben Teils.

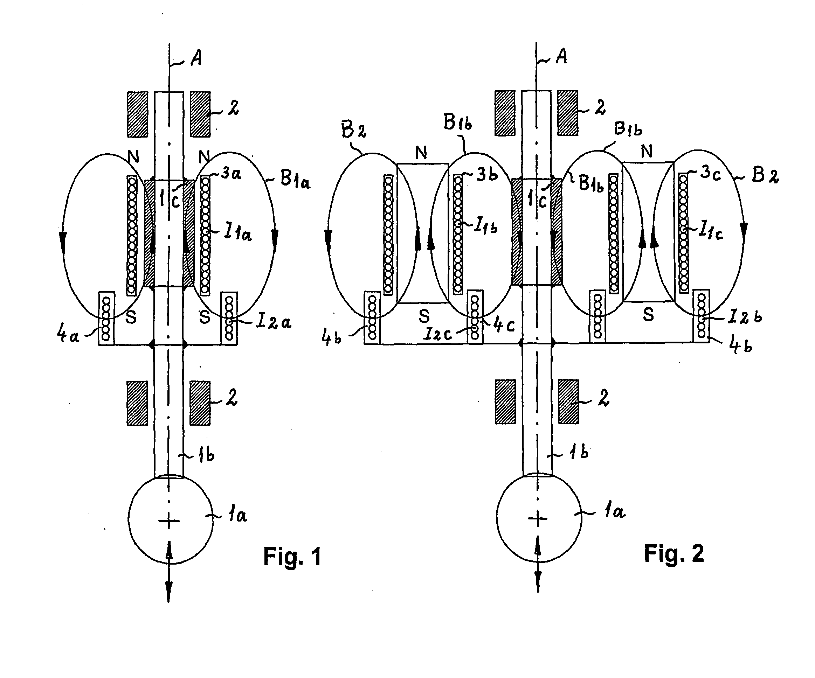

Gemäß Fig. 1 ist ein Schlagkopf (1a) an einem leichten und nicht magnetischen Träger (1 b), auswechselbar befestigt. Der Träger (1 b) ist im Gehäuse (2) radial gelagert, so dass er nur axiale Bewegungen in Richtung seiner Längsachse (A) ausführen kann. Das Gehäuse (2) wird durch eine entsprechende Aufnahme an eine Bearbeitungsmaschine wie z.B. eine Fräsmaschine oder an einem Roboter oder Hexapod befestigt. Der Träger des Schlagkopfes (1 b) kann durchgehend hohl sein, um durch seine hohle Mitte

Kabel, Messtaster oder Lichtstrahl führen zu können. An dem Träger (1b) ist koaxial eine ferromagnetische Hülse (1c) befestigt, die in einem Magnetfeld (B1) eine bestimmte Position als Ruhestellung einnimmt.

Um die Hülse (1c) befindet sich koaxial eine am Gehäuse (2) befestigte, zentral ange- ordnete Spule (3a), die mit einem Gleichstrom (11a) durchflossen wird, um ein Magnetfeld (B1a) aufzubauen. Die Spule (3a) kann aus einer einzigen Spule oder aus mehreren kleineren Spulen bestehen, die je nach Bedarf elektronisch parallel oder in Reihe oder kombiniert geschaltet werden, um die Haltekraft und die Ruhelage des Schlagkopfes zu verändern. Die Spule (3a) kann auch mechanisch axial verstellbar gestaltet sein, um die Ruhelage des Schlagkopfes manuell oder elektromotorisch oder elektromagnetisch zu verändern.

Am Träger des Schlagkopfes (1 b) befindet sich eine zweite Spule (4a) derart, dass de- ren Drahtwindungen senkrecht zu den Feldlinien des Magnetfeldes (B1a) stehen. Die Spule (4a) wird mit einem in der Frequenz und Amplitude geregelten Wechselstrom (I2a) und/oder gepulsten Strom (I2a) mit oder ohne einem Gleichstromanteil durchflossen. Dadurch bewegt sich der Schlagkopf mit definierter Frequenz und Amplitude auf und ab. Die Schlagfrequenz wird durch die Pulsfrequenz und die Schlagkraft durch die Pulshöhe und Pulsbreite bestimmt.

Gemäß Fig. 2 ist der mechanische Aufbau der Vorrichtung prinzipiell ähnlich dem der Fig. 1, jedoch wird das Magnetfeld (B1a) entweder durch ein axial magnetisierte Dauermagnetring (3) oder durch mehrere um die Hülse (1c) koaxial angeordneten kleinere zylinderförmige Dauermagnete erzeugt, die auch durch einzelne Spulen (3b, 3c, ...) ersetzt werden können. Durch diese Anordnung des Dauermagnetringes bzw. der Dauermagnete oder der Spulen entstehen zwei ringschlauchförmige Magnetflüsse, ein innerer Magnetfluß (B1b) und ein äußerer Magnetfluß (B2). Der innere Magnetfluß (B1b) sorgt gemeinsam mit der Hülse (1c) für die Ruhestellung des Schlagkopfes, während die Spule (4b) mit dem Wechselstrom bzw. dem gepulsten Strom (12b) sich im äußeren Magnetfluß (B2) befindet und für die auf und ab Bewegung des Schlagkopfes sorgt.

Bei dieser Anomung der Magnetfelder (B1b, B2) kann eine weitere, sich am Träger (1 b) des Schlagkopfes befindliche, Erregerspule (4c) im inneren Magnetfeld (B1b) platziert werden, deren Stromrichtung (12C) jedoch der Stromrichtung (12b) der ersten Erregerspule (4b) entgegengesetzt fließt, da die Magnetfelder unterschiedliche Richtungen aufweisen.

Die in den vorstehenden Beschreibung, den Zeichnungen und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich.

## Patentansprüche

1. Elektromechanisches Verfahren zur Bearbeitung, Glättung und Kaltverfestigung der Oberfläche von Werkzeugen, Maschinen- und anderen Teilen durch das Hämmern eines Schlagkopfes (1a) auf die Oberfläche der genannten Teile mittels Aufnahme an einer Bearbeitungsmaschine oder einem Roboter,
**dadurch gekennzeichnet,**
**dass** der Schlagkopf (1a) ohne Erregerstrom (12) durch einen Magnetfluss (B1) in einer Ruhelage gehalten wird und die Schlagfrequenz und Schlagamplitude durch das Fließen eines Wechsel- oder gepulsten Erregerstromes (12), mit oder ohne einem Gleichstromanteil, durch die Windungen mindestens einer Spule (4), platziert inmitten desselben Magnetflusses (B1) oder eines anderen Magnetflusses (B2), derart variabel erzeugt wird, dass der Abstand des Nulldurchganges der Schlagfrequenz von der Werkstückoberfläche durch den Erregerstrom (12) veränderbar ist.

2. Verfahren nach Anspruch 1 **dadurch gekennzeichnet,**
**dass** das Magnetfeld (B1,B2) durch einen axial magnetisierten Ring (3) oder durch mehrere zylinderförmige Dauermagnete, angeordnet auf einem Hohlzylinder, erzeugt wird.

3. Verfahren nach Anspruch 1 **dadurch gekennzeichnet,**
**dass** das Magnetfeld (B1a) durch eine Spule (3a) bzw. die Magnetfelder (B1b, B2) durch mehrere zur Achse A koaxial angeordneten Spulen (3b, 3c, ...) erzeugt werden, wobei jede Spule selbst aus mehreren elektronisch parallel und/oder in Reihe schaltbaren Spulen bestehen kann.

4. Verfahren nach einem der vorhergehenden Ansprüche, **dadurch gekennzeichnet, dass** die Klopfvorrichtung an einer Bearbeitungsmaschine oder einem Roboter durch ein analytisches CAM-System geführt wird.

5. Verfahren nach Anspruch 4 **dadurch gekennzeichnet,**
**dass** die Klopfvorrichtung und/oder die magnetische Haltekraft des Schlagkopfes (1a) und/oder der Erregerstrom (I2) und Erregerfrequenz der Schlagschwingungen gekoppelt ist an einem analytischen CAM-System und durch dieses anhand der Geometriedaten gesteuert oder geregelt wird bzw. werden.

## Claims

1. Electromechanical method for working, smoothing and cold-hardening the surface of tools, machine parts and other parts by hammering an impact head (1a) onto the surface of said parts by means of mounting them on a machine tool or a robot,
**characterised in that**
the impact head (1a) without excitation current (12) is kept in a resting position by a magnetic flux (B1) and the impact frequency and impact amplitude are produced in such a variable manner by the flow of an alternating or pulsed excitation current (I2), with or without a variable direct current component, through the windings of at least one coil (4) placed within same magnetic flux (B1) or a different magnetic flux (B2), that the distance of the zero crossing of the impact frequency from the workpiece surface can be changed by the excitation current (12).

2. The method of claim 1, **characterised in that**
the magnetic fields (B1, B2) are produced by an axially magnetised ring (3) or by a plurality of cylindrical permanent magnets, disposed on a hollow cylinder.

3. The method of claim 1, **characterised in that**
the magnetic field (B1a) is produced by a coil (3a) and the magnetic fields (B1b, B2) are produced by a plurality of coils (3b, 3c, ....) arranged coaxially to axis A, wherein each coil may itself consist of a plurality of coils that can be electronically switched in parallel and/or in series.

4. The method of any of the preceding claims, **characterised in that**
the knocking device is managed at a machine tool or a robot by an analytical CAM system.

5. The method of claim 4, **characterised in that**
the knocking device and/or the magnetic holding force of the impact head and/or the excitation current (12) and excitation frequency of the impact oscillations is coupled to an analytical CAM system and controlled or regulated by the latter on the basis of the geometrical data.

## Revendications

1. Procédé électromécanique pour le traitement, le lissage et le microforgeage à froid de la surface des outils, des machines et d'autres pièces à l'aide de l'écrouissage d'une tête de frappe (1a) sur la surface des pièces mentionnées au moyen de la réception d'une machine de traitement ou d'un robot, **caractérisé en ce que**, la tête de frappe (1a) est maintenue sans courant magnétisant (I2) par un flux magnétique (B1) dans une position de repos et la fréquence de frappe et l'amplitude de frappe, qui est produit de manière variable par l'écoulement d'un courant alternatif ou d'un courant magnétisant pulsé (I2), avec ou sans composante apériodique, par les méandres d'au moins une bobine (4), placé au milieu de ce même flux magnétique (B1) ou d'un autre flux magnétique (B2), de façon à ce que la distance du passage à zéro de la fréquence de frappe de la surface de la pièce est modifiable par le courant magnétisant (I2).

2. Procédé selon revendication 1 **caractérisé en ce que**, le champ magnétique (B1, B2) est produit par un anneau magnétisé axial (3) ou par plusieurs aimants permanents cylindriques, placés sur un cylindre en bois.

3. Procédé selon revendication 1 **caractérisé en ce que**, le champ magnétique (B1a) est produit par une bobine (3a) ou bien les champs magnétiques (B1b, B2) sont produits par plusieurs bobines placées sur l'axe A coaxialement (3b, 3c, ...) où chaque bobine même peut être composée de plusieurs bobines parallèles électronique et / ou commutables en série.

4. Procédé selon l'une des revendications précédentes, **caractérisé en ce que** le dispositif de tassement est conduit par un système CAM analytique à une machine de traitement ou un robot.

5. Procédé selon revendication 4 **caractérisé en ce que**, le dispositif de tassement et / ou la force de maintien magnétique de la tête de frappe (1a) et / ou du courant magnétisant (I2) et de la fréquence magnétisante des oscillations au choc est lié à un système CAM analytique et, est ou bien sont commandé(s) ou réglé(s) par celui-ci sur la base des données géométriques.
